# EUROPÄISCHE PATENTSCHRIFT

(11) **EP 1 955 026 B1**
(45) Veröffentlichungstag und Bekanntmachung des Hinweises auf die Patenterteilung: **31.10.2018**
(21) Anmeldenummer: 06829163.2
(22) Anmeldetag: 28.11.2006
(51) Int. Cl.: G01F 25/00, G01S 13/10, G01F 23/284

(54) **REFERENZPULSERZEUGUNG**
REFERENCE PULSE GENERATION
GENERATION D'IMPULSIONS DE REFERENCE

(30) Priorität: 30.11.2005 DE 102005057053; 30.11.2005 US 741190 P
(43) Veröffentlichungstag der Anmeldung: 13.08.2008
(73) Patentinhaber: VEGA Grieshaber KG, 77709 Wolfach (DE)
(72) Erfinder: FEHRENBACH, Josef, 77716 Haslach (DE); SCHULTHEISS, Daniel, 78132 Hornberg (DE); MÜLLER, Christoph, 77728 Oppenau (DE); GRIESSBAUM, Karl, 77796 Mühlenbach (DE)
(74) Vertreter: Maiwald Patent- und Rechtsanwaltsgesellschaft mbH
(86) Internationale Anmeldenummer: PCT/EP2006/011417
(87) Internationale Veröffentlichungsnummer: WO 2007/062806

(56) Entgegenhaltungen:
- US-A- 5 656 774
- US-A- 5 898 308
- US-A- 6 067 673

## Beschreibung

### Verwandte Anmeldungen:

Die vorliegende Anmeldung beansprucht die Priorität der US Provisional Patentanmeldung Nr. 60/741,190 eingereicht am 30. November 2005 und der deutschen Patentanmeldung Nr. 10 2005 057 053.4, eingereicht am 30. November 2005, deren Inhalte hierin durch Referenz inkorporiert werden.

### Technisches Gebiet:

Die vorliegende Erfindung betrifft die Füllstandmessung. Insbesondere betrifft die vorliegende Erfindung ein Hochfrequenzmodul zum Auskoppeln eines Referenzsignals für ein Füllstandmessgerät, ein Füllstandmessgerät zur Bestimmung eines Füllstands in einem Tank, die Verwendung eines derartigen Hochfrequenzmoduls zur Füllstandmessung, sowie ein Verfahren zum Auskoppeln eines Referenzsignals für ein Füllstandmessgerät.

### Hintergrund der Erfindung:

Bekannte Füllstandmessgeräte weisen eine Antenne auf, welche Radar- oder Mikrowellen aussendet bzw. empfängt, um den Füllstand eines Mediums in einem Füllgutbehälter zu ermitteln. Die Antenne eines solchen Füllstandmessgeräts ist dabei beispielsweise innerhalb eines Behälters angeordnet.

Solche Füllstandmessgeräte werden beispielsweise im Patentdokument US 5,898,308 oder Patentdokument US 6,067,673 gezeigt. Hochfrequenzmodule derartiger Füllstandmessgeräte dienen der Erzeugung von Sendesignalen, welche über die Antenne in Richtung Füllgut ausgesendet werden. Die empfangenen Messsignale werden über die Antenne aufgenommen und mit Hilfe eines Referenzsignals ausgewertet. Dieses Referenzsignal kann als Referenzpuls (Leckpuls) ausgeführt sein, dessen Form und Amplitude von der Bauteilqualität eines Zirkulators, eines Sende-/ Empfangskopplers oder auch von der Temperatur der Messvorrichtung abhängt. Weiterhin kann eine Reflexion der Antenne selbst oder der Antenneneinkopplung den Leckpuls negativ beeinflussen, wenn die Antenne beispielsweise nahe am Koppler (Zirkulator) angeordnet ist oder im Falle großer Echos im Nahbereich.

### Darstellung der Erfindung:

Es ist eine Aufgabe der vorliegenden Erfindung, eine verbesserte Referenzpulserzeugung für die Füllstandmessung bereitzustellen.

Gemäß einem Ausführungsbeispiel der vorliegenden Erfindung ist ein Hochfrequenzmodul zum Auskoppeln eines Referenzsignals für ein Füllstandmessgerät angegeben, das Hochfrequenzmodul umfassend eine erste Übertragungsstrecke zum Übertragen eines elektromagnetischen Sendesignals von einer Quelle zu einer Antenne oder zu einer Sonde, eine Abzapfung zum Auskoppeln eines Referenzsignals aus der Übertragungsstrecke und eine Verzögerung zum Verzögern des Sendesignals auf seinem Weg zu der Antenne oder Sonde , wobei die Verzögerung nach der Abzapfung angeordnet ist.

Somit wird also das Sendesignal auf seinem Weg zur Antenne (im Falle eines Füllstandradars) oder zu einer Sonde (im Falle eines TDR-Füllstandmessers) angezapft. Das dadurch ausgekoppelte Referenzsignal kann zur Auswertung eines Messsignals von der Antenne verwendet werden. Nach der Auskopplung des Referenzsignals wird das Sendesignal gegenüber dem Referenzsignal zeitlich verzögert, so dass beispielsweise große Echos im Nahbereich, Reflexionen der Antenne oder mangelnde Isolation des Sende-/ Empfangskopplers die Auswertung des Referenzsignals nicht stören.

Gemäß einem weiteren Ausführungsbeispiel der vorliegenden Erfindung umfasst die Abzapfung einen ersten Richtkoppler.

Der Richtkoppler ist beispielsweise als symmetrischer öder unsymmetrischer Hybridkoppler ausgeführt.

Ein solcher Hybridkoppler lässt sich kostengünstig in eine Schaltung des Hochfrequenzmoduls integrieren.

Gemäß einem weiteren Ausführungsbeispiel der vorliegenden Erfindung umfasst die Verzögerung eine Laufzeitleitung.

Beispielsweise ist die Laufzeitleitung als Stripline ausgeführt, welche in einer Multilayerleiterplatte integriert ist. Eine solche Stripline hat auf beiden Seiten Masseflächen, ist also beispielsweise in einer anderen Ebene angeordnet als die Übertragungsstrecke. Je nach gewünschter Verzögerung kann die Stripline eine entsprechende Länge aufweisen.

Gemäß einem weiteren Ausführungsbeispiel der vorliegenden Erfindung ist die Laufzeitleitung als Microstrip ausgeführt.

Ebenso kann die Laufzeitleitung eine sog. "Low Temperature Cofired Ceramic" (ein sog. LTCC-Bauteil) aufweisen. Diese Keramik weist eine hohe Dielektrizitätskonstante auf und ist beispielsweise SMD-bestückbar.

Gemäß einem weiteren Ausführungsbeispiel der vorliegenden Erfindung ist die Laufzeitleitung als aufgewickeltes Koaxialkabel ausgeführt.

Der Richtkoppler zum Auskoppeln des Referenzsignals kann einen einstellbaren Koppelfaktor aufweisen.

Gemäß einem weiteren Ausführungsbeispiel der vorliegenden Erfindung ist eine Steuerung vorgesehen, welche zum Einstellen des Koppelfaktors des Richtkopplers ausgeführt ist.

Diese Steuerung kann dann je nach Umgebungsbedingungen und Anforderungen entsprechende Einstellungen am Koppelfaktor des Richtkopplers vornehmen. Somit kann die Amplitude des Referenzpulses entsprechend geändert werden.

Gemäß einem weiteren Ausführungsbeispiel der vorliegenden Erfindung umfasst das Hochfrequenzmodul weiterhin eine zweite Übertragungsstrecke zum Übertragen eines Messsignals von der Antenne zu einer Auswerteschaltung und eine Einkopplung zum Einkoppeln eines Referenzsignals in die zweite Übertragungsstrecke.

Auf diese Weise wird gewährleistet, dass das ausgekoppelte Referenzsignal zur Auswertung des Messsignals verwendet werden kann, wobei das Messsignal gegenüber dem Referenzsignal verzögert worden ist.

Gemäß einem weiteren Ausführungsbeispiel der vorliegenden Erfindung ist die Einkopplung als Richtkoppler ausgeführt, bei dem es sich beispielsweise um einen Hybridkoppler handeln kann.

Gemäß einem weiteren Ausführungsbeispiel der vorliegenden Erfindung umfasst das Hochfrequenzmodul weiterhin einen Pulsgenerator zum Erzeugen eines gepulsten Sendesignals, wobei das Referenzsignal ein Referenzpuls ist.

Gemäß einem weiteren Ausführungsbeispiel der vorliegenden Erfindung ist ein Füllstandmessgerät zur Bestimmung eines Füllstands in einem Tank angegeben, das Füllstandmessgerät umfassend ein Hochfrequenzmodul, wie oben beschrieben.

Gemäß einem weiteren Ausführungsbeispiel der vorliegenden Erfindung umfasst das Füllstandmessgerät eine Antenne zum Aussenden und / oder Empfangen von elektromagnetischen Wellen.

Gemäß einem weiteren Ausführungsbeispiel der vorliegenden Erfindung umfasst das Füllstandmessgerät eine Sonde zum Übertragen der elektromagnetischen Wellen zum Füllgut.

Weiterhin ist die Verwendung eines erfindungsgemäßen Hochfrequenzmoduls zur Füllstandmessung angegeben.

Weiterhin ist ein Verfahren zum Auskoppeln eines Referenzsignals für ein Füllstandradar angegeben, bei dem ein elektromagnetisches Sendesignal über eine Übertragungsstrecke von einer Quelle zu einer Antenne übertragen wird, ein Referenzsignal von der Übertragungsstrecke ausgekoppelt wird, das Sendesignal auf seinem Weg zur Antenne verzögert wird, wobei die Verzögerung des Sendesignals nach dem Auskoppeln des Referenzsignals erfolgt.

Hierdurch wird ein Verfahren bereitgestellt, durch das ein Leckpuls abgenommen werden kann, welcher durch den Antennenpuls nicht beeinflusst wird, selbst wenn die Antenne nahe am Koppler angeordnet ist, oder im Falle großer Echos im Nahbereich. Hierdurch kann die Qualität bzw. Genauigkeit der Messung wesentlich erhöht werden.

Weitere Ausführungsbeispiele, Aufgaben und Vorteile der Erfindung ergeben sich aus den Unteransprüchen.

### Kurze Beschreibung der Zeichnungen:

Im Folgenden werden mit Verweis auf die Figuren bevorzugte Ausführungsbeispiele der vorliegenden Erfindung beschrieben.
Fig. 1 zeigt eine schematische Darstellung eines Hochfrequenzmoduls.
Fig. 2a zeigt eine schematische Darstellung eines Hochfrequenzmoduls gemäß einem Ausführungsbeispiel der vorliegenden Erfindung.
Fig. 2b zeigt eine schematische Darstellung eines Hochfrequenzmoduls gemäß einem weiteren Ausführungsbeispiel der vorliegenden Erfindung.
Fig. 3 zeigt eine schematische Darstellung eines Füllstandmessgerätes gemäß einem Ausführungsbeispiel der vorliegenden Erfindung.

Die Darstellungen in den Figuren sind schematisch und nicht maßstäblich.

### Detaillierte Beschreibung von exemplarischen Ausführungsformen:

In der folgenden Figurenbeschreibung werden für die gleichen oder ähnlichen Elemente die gleichen Bezugsziffern verwendet.

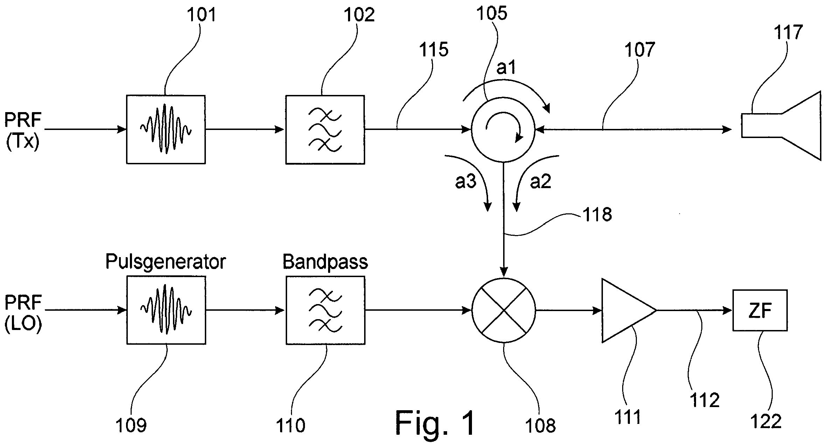

Fig. 1 zeigt eine schematische Darstellung eines Radarmoduls. Das Radarmodul weist einen Pulsgenerator 101 auf, welcher der Erzeugung eines Sendepulses dient. Dieser Sendepuls wird dann über den Bandpass 102 gefiltert und über die Übertragungsstrecke 115 einem Zirkulator 105 zugeführt.

Der Puls durchläuft den Zirkulator mit einer Dämpfung von a1 = 1dB und wird über die Leitung 107 an die Antenne 117 übertragen. Die Antenne 117 sendet den Puls dann in Richtung Füllgut aus und empfängt daraufhin einen entsprechenden Messpuls. Der Messpuls wird über die Leitung 107 an den Zirkulator 105 übertragen und dann, ebenfalls mit einer Dämpfung von a2 = 1dB, an die Leitung 118 abgegeben.

Weiterhin leitet der Zirkulator 105 während der Übertragung des Sendesignals von Leitung 115 auf Leitung 107 hin zur Antenne einen Referenzpuls von der Leitung 115 zur Leitung 118 bei einer Dämpfung von a3 = 20dB ab. Referenzpuls und Messsignal werden in den Sampling-Mixer 108 eingespeist.

Es ist ein zweiter Pulsgenerator 109 vorgesehen, welcher ein gepulstes Signal erzeugt, welches einen Bandpass 110 durchläuft und dann ebenfalls in den Sampling-Mixer 108 eingegeben wird.

Der Sampling-Mixer 108 erzeugt dann ein zeitgedehntes Signal, welches durch den Verstärker 111 verstärkt wird und dann als Zwischenfrequenz 112 an eine Auswerteschaltung 122 weitergeleitet wird.

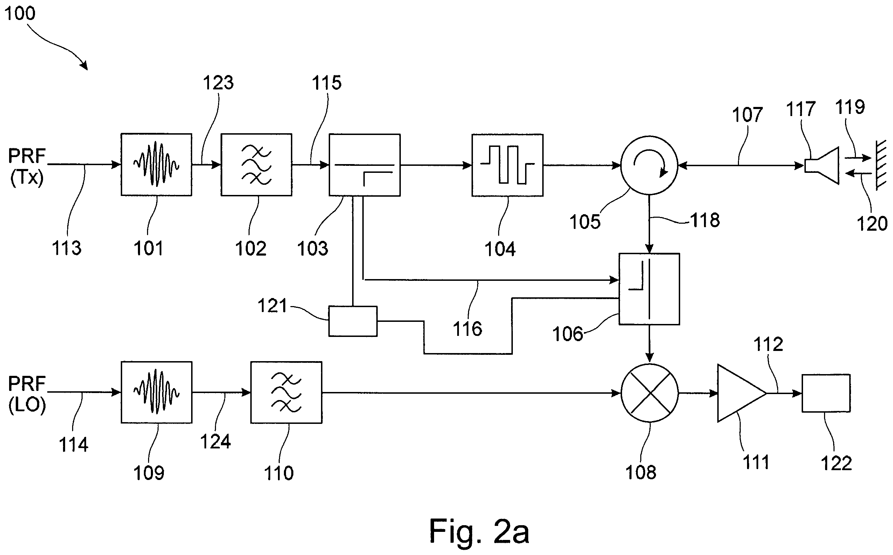

Fig. 2a zeigt eine schematische Darstellung eines Radarmoduls gemäß einem Ausführungsbeispiel der vorliegenden Erfindung. Wie in Fig. 2a zu erkennen, weist das Radarmodul 100 im Wesentlichen eine Übertragungsstrecke 115 zum Übertragen eines elektromagnetischen Sendesignals von einem Pulsgenerator 101 zu einer Antenne 117, eine Abzapfung 103 zum Auskoppeln eines Referenzsignals aus der Übertragungsstrecke 115 und eine Verzögerung 104 zum Verzögern des Sendesignals auf seinem Weg zur Antenne 117 auf. Die Verzögerung 104 ist hierbei nach der Abzapfung 103 angeordnet.

Statt einer Antenne 117 kann auch eine Leitung zum Leiten des Sendesignals zum Füllgut vorgesehen sein, um eine nicht-berührungsfreie Messung vorzunehmen.

Der Pulsgenerator 101 wird durch ein PRF(Tx) Signal 113 mit der Pulswiederholfrequenz (pulse repetition frequency, PRF) für den Sendezweig (transmit path, Tx) gespeist.

Das vom Pulsgenerator 101 erzeugte Ausgangssignal 123 wird nachfolgend in einem Bandpass 102 gefiltert und durchläuft dann die Übertragungsstrecke 115 zum Richtkoppler 103 (Abzapfung).

Der Richtkoppler 103 ist beispielsweise als unsymmetrischer Hybrid ausgeführt, dessen Koppelfaktor einstellbar ist. Von dem Sendesignal wird nun über den Richtkoppler ein Referenzpuls 116 abgezweigt bzw. ausgekoppelt und einem zweiten Richtkoppler 106 zugeführt.

Das Sendesignal durchläuft nach der Abzapfung des Referenzpulses eine Laufzeitleitung 104, um zeitlich verzögert zu werden. Diese Laufzeitleitung 104 ist beispielsweise als Stripline in einer Multilayerleiterplatte, als aufgewickeltes Koaxialkabel oder als LTCC-Bauteil ausgeführt. Nach der zeitlichen Verzögerung des Sendesignals durchläuft das Sendesignal einen Zirkulator 105, welcher das Sendesignal mit geringer Dämpfung über die Übertragungsstrecke 107 an die Antenne 117 weiterleitet.

Von der Antenne 117 wird dann das Sendesignal ausgesendet und als Signal 119 in Richtung Füllgut übertragen. Von dort wird es dann als Empfangssignal 120 reflektiert und von der Antenne 117 aufgenommen und dem Zirkulator 105 zugeführt. Hier wird das Empfangssignal dann mit geringer Dämpfung an die Leitung 118 und sodann an den Richtkoppler 106 geleitet, wo es mit dem Referenzpuls zusammenläuft. Referenzpuls und Empfangssignal (Messsignal) werden an den Sampling-Mixer 108 weitergeleitet. Der Sampling-Mixer 108 wird von dem zweiten Pulsgenerator 109 aufgesteuert.

Der zweite Pulsgenerator 109 (welcher im übrigen entweder ein eigenes Gerät darstellen kann oder identisch zum ersten Pulsgenerator 101 sein kann) wird mit einem PRF (LO) Signal 114 mit der Pulswiederholfrequenz (PRF) des Abtastoszillators (local oscillator, LO) versorgt und erzeugt ein gepulstes Ausgangssignal 124, welches nachfolgend den Bandpass 110 durchläuft, bevor es dem Sampling-Mixer 108 zugeführt wird.

Nachdem der Sampling-Mixer 108 eine Zeitdehnung des Messsignals vorgenommen hat, findet eine Verstärkung des Ausgangssignals durch Verstärker 111 statt. Das resultierende Signal 112 wird dann als Zwischenfrequenz der Auswerteschaltung 122 zugeführt.

Die Amplitude des Referenzpulses ist über den Koppelfaktor der Richtkoppler 103, 106 einstellbar. Die Richtkoppler 103, 106 können ggf. über eine Steuerung 121 angesteuert und somit deren Koppelfaktoren (einzeln oder gemeinsam) eingestellt werden.

Durch die verbesserte Pulsform des Referenzpulses wird eine höhere Genauigkeit der Messung bereitgestellt. Durch die Abzapfung des Referenzpulses in Kombination mit der Laufzeitleitung kann eine Beeinflussung des Referenzpulses durch die Antenne oder die Einkopplung oder durch Echos im Nahbereich vermieden werden.

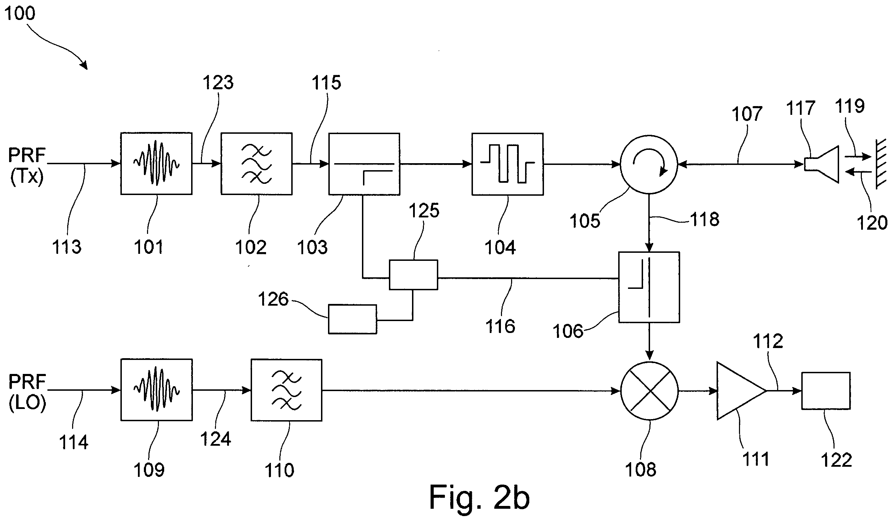

Fig. 2b zeigt eine ähnliche Anordnung wie Fig. 2a jedoch ist hier ein Dämpfungsglied 125 zwischen die Richtkoppler 103 und 106 eingefügt, mit dem sich die Größe des Referenzsignals 116 einstellen lässt. Dieses Dämpfungsglied 125 kann als Festdämpfungsglied ausgeführt sein oder als variables Dämpfungsglied, das sich dann über eine Steuervorrichtung 126 individuell einstellen lässt.

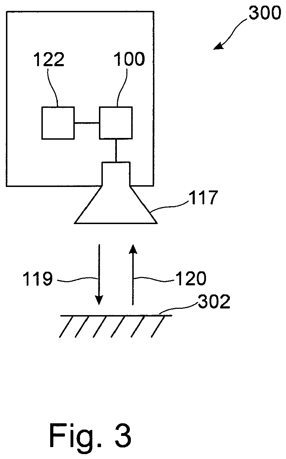

Fig. 3 zeigt eine schematische Darstellung eines Füllstandradars gemäß einem Ausführungsbeispiel der vorliegenden Erfindung. Wie in Fig. 3 zu erkennen, weist das Füllstandradar 300 ein Radarmodul 100, eine Auswerteschaltung 122 und eine Antenne 117 auf. Die Antenne 117 dient hierbei dem Senden bzw. Empfangen von elektromagnetischen Signalen 119, 120, welche von einer Füllgutoberfläche 302 reflektiert werden.

Das Füllstandmessgerät 300 kann als Füllstandradar oder auch zum nichtberührungsfreien Messen von Füllständen, z.B. in Form eines TDR-Geräts, ausgeführt sein.

Ergänzend sei darauf hingewiesen, dass "umfassend" keine andere Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Füllstandmessgerät zur Bestimmung eines Füllstands in einem Tank, das Füllstandmessgerät (300) umfassend ein Hochfrequenzmodul zum Auskoppeln eines Referenzsignals für das Füllstandmessgerät, das Hochfrequenzmodul (100) umfassend:
eine Quelle (101) zum Erzeugen eines elektromagnetischen Sendesignals;
eine erste Übertragungsstrecke (115) zum Übertragen eines elektromagnetischen Sendesignals von der Quelle (101) zu einer Antenne oder Sonde;
eine Abzapfung (103) zum Auskoppeln eines Referenzsignals aus der Übertragungsstrecke (115);
eine Verzögerung (104) zum Verzögern des Sendesignals auf seinem Weg zu der Antenne oder Sonde gegenüber dem Referenzsignal;
wobei die Verzögerung (104) nach der Abzapfung (103) angeordnet ist, so dass Echos im Nahbereich und Reflexionen der Antenne das Referenzsignal nicht beeinflussen.

2. Füllstandmessgerät nach Anspruch 1,
wobei die Abzapfung (103) einen ersten Richtkoppler umfasst.

3. Füllstandmessgerät nach Anspruch 2,
wobei der Richtkoppler (103) als Hybridkoppler ausgeführt ist.

4. Füllstandmessgerät nach einem der vorhergehenden Ansprüche,
wobei die Verzögerung (104) eine Laufzeitleitung umfasst.

5. Füllstandmessgerät nach Anspruch 4,
:CGS
wobei die Laufzeitleitung als Stripline in einer Multilayerplatte ausgeführt ist.

6. Füllstandmessgerät nach Anspruch 4,
wobei die Laufzeitleitung als Microstrip ausgeführt ist.

7. Füllstandmessgerät nach Anspruch 4,
wobei die Laufzeitleitung als LTCC-Bauteil ausgeführt ist.

8. Füllstandmessgerät nach Anspruch 4,
wobei die Laufzeitleitung als aufgewickeltes Koaxialkabel ausgeführt ist.

9. Füllstandmessgerät nach einem der Ansprüche 2 bis 8,
wobei der Richtkoppler (103) einen einstellbaren Koppelfaktor aufweist.

10. Füllstandmessgerät nach Anspruch 9, weiterhin umfassend:
eine Steuerung (121) zum Einstellen des Koppelfaktors.

11. Füllstandmessgerät nach einem der Ansprüche 2 bis 9, weiterhin umfassend:
ein Dämpfungsglied (125) zur Anpassung der Größe des Referenzsignals.

12. Füllstandmessgerät nach Anspruch 10, weiterhin umfassend:
eine Steuerung (126) zum Einstellen der Dämpfung.

13. Füllstandmessgerät nach einem der vorhergehenden Ansprüche, weiterhin umfassend:
eine zweite Übertragungsstrecke (118) zum Übertragen eines Messsignals von der Antenne oder Sonde zu einer Auswerteschaltung;
eine Einkopplung (106) zum Einkoppeln des Referenzsignals in die zweite Übertragungsstrecke (118).

14. Füllstandmessgerät nach Anspruch 13,
wobei die Einkopplung (106) ein Richtkoppler ist.

15. Füllstandmessgerät nach einem der vorhergehenden Ansprüche, weiterhin umfassend:
einen Pulsgenerator (101) zum Erzeugen eines gepulsten Sendesignals;
wobei das Referenzsignal ein Referenzpuls ist.

16. Füllstandmessgerät nach einem der vorhergehenden Ansprüche, weiterhin umfassend:
eine Antenne (117) zum Aussenden und / oder Empfangen von elektromagnetischen Wellen (119; 120).

17. Füllstandmessgerät nach einem der vorhergehenden Ansprüche, weiterhin umfassend:
eine Sonde zum Übertragen der elektromagnetischen Wellen zum Füllgut.

## Claims

1. A fill level meter for determining a fill level in a tank, the fill level meter (300) comprising a high frequency module for extracting a reference signal for the fill level meter, the high frequency module (100) comprising:
a source (101) for generating an electromagnetic transmit signal;
a first transmission link (115) for transmitting a electromagnetic transmit signal from a source (101) to an antenna or a probe;
a tap (103) for extracting a reference signal from the transmission link (115);
a time-delay (104) for delaying the transmit signal on its way to the antenna or probe relative to the reference signal;
wherein the time-delay (104) is arranged after the tap (103), so that echoes in the near region and reflections of the antenna do not affect the reference signal.

2. The fill level meter according to claim 1,
wherein the tap (103) comprises a first directional coupler.

3. The fill level meter according to claim 2,
wherein the directional coupler (103) is configured as a hybrid coupler.

4. The fill level meter according to any of the preceding claims,
wherein the time-delay (104) comprises a delay line.

5. The fill level meter according to claim 4,
wherein the delay line is configured as a strip line in a multilayer board.

6. The fill level meter according to claim 4,
wherein the delay line is configured as a microstrip.

7. The fill level meter according to claim 4,
wherein the delay line is configured as a LTCC component.

8. The fill level meter according to claim 4,
wherein the delay line is configured as a wound coaxial cable.

9. The fill level meter according to any of claims 2 to 8,
wherein the directional coupler (103) comprises an adjustable coupling factor.

10. The fill level meter according to claim 9, further comprising:
a controller (121) for setting the coupling factor.

11. The fill level meter according to any of claims 2 to 9, further comprising:
an attenuation member (125) for adapting the magnitude of the reference signal.

12. The fill level meter according to claim 10, further comprising:
a controller (126) for setting the attenuation.

13. The fill level meter according to any of the preceding claims, further comprising:
a second transmission link (118) for transmitting a measuring signal from the antenna or probe to an evaluation circuit;
a coupling (106) for coupling the reference signal into the second transmission link (118).

14. The fill level meter according to claim 13,
wherein the coupling (106) is a directional coupler.

15. The fill level meter according to any of the preceding claims, further comprising:
a pulse generator (101) for generating a pulsed transmit signal;
wherein the reference signal is a reference pulse.

16. The fill level meter according to any of the preceding claims, further comprising:
an antenna (117) for transmitting and/or receiving electromagnetic waves (119; 120).

17. The fill level meter according to any of the preceding claims, further comprising:
a probe for transmitting the electromagnetic waves to the fill material.

## Revendications

1. Appareil de mesure de niveau de remplissage pour déterminer un niveau de remplissage dans un réservoir, l'appareil de mesure de niveau de remplissage (300) comportant un module à haute fréquence pour extraire un signal de référence pour l'appareil de mesure de niveau de remplissage, le module à haute fréquence (100) comportant :
une source (101) pour générer un signal d'émission électromagnétique,
une première voie de transmission (115) pour transmettre un signal d'émission électromagnétique de la source (101) à une antenne ou à une sonde,
un point de prélèvement (103) pour extraire un signal de référence provenant de la voie de transmission (115),
une temporisation (104) pour temporiser le signal d'émission sur son trajet jusqu'à l'antenne ou à la sonde par rapport au signal de référence,
dans lequel la temporisation (104) est agencée après le point de prélèvement (103), de sorte que des échos dans la zone proche et des réflexions de l'antenne n'influent pas sur le signal de référence.

2. Appareil de mesure de niveau de remplissage selon la revendication 1,
dans lequel le point de prélèvement (103) comporte un premier coupleur directionnel.

3. Appareil de mesure de niveau de remplissage selon la revendication 2,
dans lequel le coupleur directionnel (103) est conçu comme un coupleur hybride.

4. Appareil de mesure de niveau de remplissage selon l'une des revendications précédentes,
dans lequel la temporisation (104) comporte une ligne à retard.

5. Appareil de mesure de niveau de remplissage selon la revendication 4,
dans lequel la ligne à retard est conçue comme une ligne à rubans dans une plaque à couches multiples.

6. Appareil de mesure de niveau de remplissage selon la revendication 4,
dans lequel la ligne à retard est conçue comme une ligne microruban.

7. Appareil de mesure de niveau de remplissage selon la revendication 4,
dans lequel la ligne à retard est conçue comme un composant LTCC.

8. Appareil de mesure de niveau de remplissage selon la revendication 4,
dans lequel la ligne à retard est conçue comme un câble coaxial enroulé.

9. Appareil de mesure de niveau de remplissage selon l'une des revendications 2 à 8,
dans lequel le coupleur directionnel (103) a un facteur de couplage réglable.

10. Appareil de mesure de niveau de remplissage selon la revendication 9, comportant en outre :
une commande (121) pour régler le facteur de couplage.

11. Appareil de mesure de niveau de remplissage selon l'une des revendications 2 à 9, comportant en outre :
un élément d'atténuation (125) pour adapter la grandeur du signal de référence.

12. Appareil de mesure de niveau de remplissage selon la revendication 10, comportant en outre :
une commande (126) pour régler l'atténuation.

13. Appareil de mesure de niveau de remplissage selon l'une des revendications précédentes, comportant en outre :
une seconde voie de transmission (118) pour transmettre un signal de mesure de l'antenne ou de la sonde jusqu'à un circuit d'exploitation,
un couplage (106) pour coupler le signal de référence dans la seconde voie de transmission (118).

14. Appareil de mesure de niveau de remplissage selon la revendication 13,
dans lequel l'élément de couplage (106) est un coupleur directionnel.

15. Appareil de mesure de niveau de remplissage selon l'une des revendications précédentes, comportant en outre :
un générateur d'impulsions (101) pour générer un signal d'émission pulsé,
dans lequel le signal de référence est une impulsion de référence.

16. Appareil de mesure de niveau de remplissage selon l'une des revendications précédentes, comportant en outre :
une antenne (117) pour émettre et/ou recevoir des ondes électromagnétiques (119 ; 120).

17. Appareil de mesure de niveau de remplissage selon l'une des revendications précédentes, comportant en outre :
une sonde pour transmettre des ondes électromagnétiques jusqu'au produit de remplissage.
